# EUROPEAN PATENT APPLICATION

(11) **EP 1 862 954 A1**
(43) Date of publication of application: **05.12.2007**
(21) Application number: 06011401.4
(22) Date of filing: 01.06.2006
(51) Int. Cl.: G06Q 10/00

(54) **A method and a system for testing a process model**

(71) Applicant: SIEMENS AKTIENGESELLSCHAFT, 80333 München (DE)
(72) Inventor: Augustin, Stefan, 81379 München (DE); Last, Holger, 80801 München (DE)

(57) **Abstract**

A method and a system for testing a process module comprising a process module repository for storing a process model including inter-linked process steps and a web service repository for storing executable web services. An assignment unit is provided for assigning to each process step of said process model under test a corresponding web service stored in the web service repository to generate an executable web service chain. An execution unit is provided for executing the generated web service chain to test the process model.

## Description

### BACKGROUND OF THE INVENTION

The invention relates to a method and a system for testing and simulating a process model.

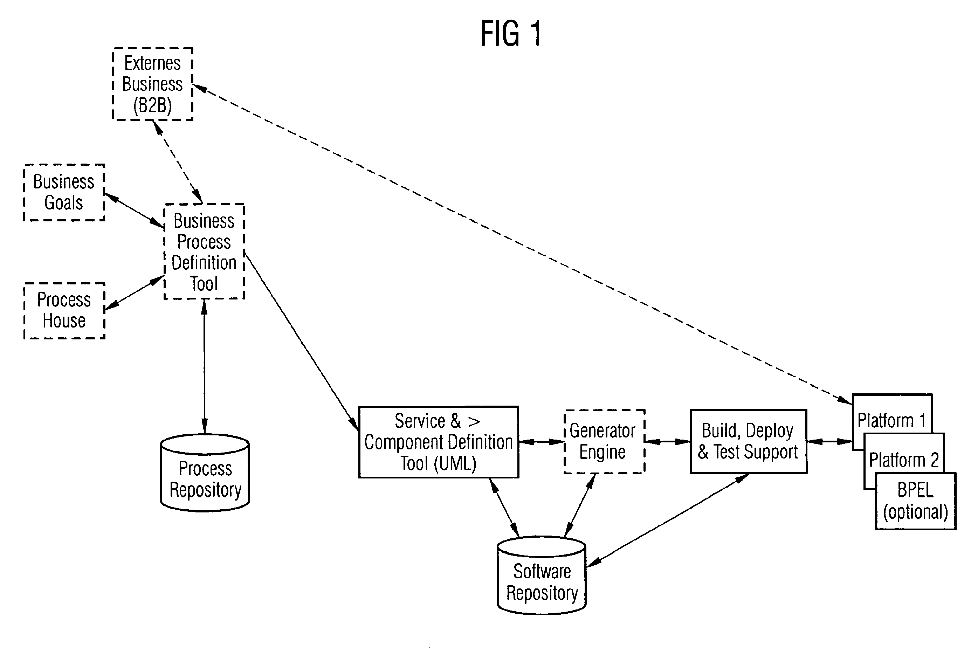

Figure 1 shows schematically a conventional system for developing a software for a technical or business process. For developing a software for a business model, first, business goals are defined. On the basis of a process house, i. e. a data base in which predefined processes in form of process models are stored, such as an event-driven process chain (EDC), the business process is defined by means of a business process definition tool, such as ARIS. The business process definition tool generates an abstract model of the business process. For definition of the business process, the business process definition tool uses a corresponding process repository in which the defined business processes are stored. Via a data export interface, the defined business process model is exported to a software definition tool implementing the business process in a software modelling language. The process model is, for instance, converted into an UML (Unified Modelling Language) model. The generated software model is stored in a software repository forming a data base. The software modelling language depends on the used programming method, the programming language and the IT infrastructure. The software model programmed in the software modelling language is tested in the test software environment. Errors found during the test are eliminated by reprogramming the software model in the software model language.

Accordingly, in the conventional system as shown in figure 1, a process defined by a process definition tool, such as ARIS, is not tested directly but the process model is first converted into the software model programmed in the software description language and then this software model is tested. This has several drawbacks. Errors of the defined process model are not found immediately but only later when the corresponding software model has already been generated and was tested by a test engine. Consequently, errors in the process model are found later during the developing of the software. Therefore, the time for development an optimized software for a defined technical or business process is high so that the time to market is also increased. The separation of the process model domain from the software model domain increases the necessary efforts for developing and testing a business or a technical process and does not allow for a round-trip engineering of the software. Further, a disadvantage of the conventional system as shown in figure 1 is, that each necessary change of the process model has to be performed by use of the process definition tool and then the complete process model has to be exported again to generate a corresponding software model which is again run and tested in the software model testing environment. Furthermore, an error which occurs in the software model domain has to be analyzed and a programmer has to translate mentally the found error into a corresponding change of the process model before the programmer performs the change in the process model by use of the process model definition tool, such as ARIS. The process model has again to be exported and converted into the software model and is tested again, wherein it is not guaranteed that the amended process model really avoids the initially found software error. Accordingly, it is very difficult to develop a operating software model for a defined technical or business process with the conventional software model development environment as shown in figure 1.

Accordingly, it is an object of the present invention to provide a method and a system for testing a process model which overcomes the above-mentioned drawbacks and which allows for a flexible and fast development of a software for defined process models.

### BRIEF SUMMARY OF THE INVENTION

The invention provides a method for testing a process model comprising the following steps:
providing the process model having inter-linked process steps,
assigning to each process step a corresponding executable web service stored in a web service repository to generate an executable web service chain, and
executing the generated web service chain to test said process model.

In a preferred embodiment, each web service comprises a web service name,
a web service descriptor for describing a function of said web service, and
an executable web service program code.

In a preferred embodiment of the method according to the present invention, when for a process step no corresponding web service is stored in said web service repository, a dummy web service is generated and assigned to the process step.

In a preferred embodiment of the method according to the present invention, the dummy web service comprises
a web service name for identifying the web service and for indicating that this web service is a dummy web service,
a web service descriptor for describing a function of said dummy web service, and
at least one simulation rule for simulating the function of said dummy web service.

In a preferred embodiment of the method according to the present invention, the simulation rules of said dummy web service calculate simulation data for web services assigned to process steps which are linked to said process step to which the dummy web service has been assigned.

In a preferred embodiment of the method according to the present invention, the simulation rules of said dummy web service calculate simulation data in response to input data.

In a preferred embodiment of the method according to the present invention, the input data is input by a tester.

In a preferred embodiment of the method according to the present invention, the input data is input from web services assigned to process steps which are linked to said process step to which the dummy web service has been assigned.

In a preferred embodiment of the method according to the present invention, the provided process model is stored in a process model repository.

In a preferred embodiment of the method according to the present invention, the tested process model is converted to an UML (Unified Modelling Language) script which is stored in a software repository.

In a preferred embodiment of the method according to the present invention, the process model is converted to a BPEL (Business Process Execution Language) script which is executed by a BPEL engine.

In an embodiment of the method according to the present invention, the BPEL script is modified by means of a BPEL design tool.

In a further embodiment of the method according to the present invention, the web service descriptor describes a function of said web service in a web service description language (WSDL).

In a preferred embodiment of the method according to the present invention, the web service descriptor is stored in a UDDI (Universal Description Discovery Integration) directory of said web service repository.

The invention further provides a system for testing a process model comprising
a process model repository for storing said process model including inter-linked process steps,
a web service repository for storing executable web services, an assignment unit for assigning to each process step of said process model under test a corresponding web service stored in said web service repository to generate an executable web service chain, and
an execution unit for executing the generated web service chain to test said process model.

In a preferred embodiment of the system according to the present invention, a process definition tool is provided for generating said process model.

In a preferred embodiment of the system according to the present invention, the assignment unit assigns a generated dummy web service to a process step when no corresponding web service is stored in said web service respository.

In a preferred embodiment of the system according to the present invention, each web service stored in said web service repository comprises
a web service name indicating said web service,
a web service descriptor for describing a function of said web service, and
an executable web service program code.

In a preferred embodiment of the system according to the present invention, a dummy web service is assigned by said assignment unit comprising
a web service name indicating that the web service is a dummy web service,
a web service descriptor for describing a function of said dummy web service, and
at least one simulation rule for simulating at least one function of said dummy web service.

In a preferred embodiment of the system according to the present invention, a rule design tool is provided for generating the simulation rules of said dummy web service.

In a preferred embodiment of the system according to the present invention, a generated dummy web service is stored in the web service repository.

In a preferred embodiment of the system according to the present invention, a conversion unit is provided for converting the tested process model to an UML (Unified Modelling Language) script.

In a preferred embodiment of the system according to the present invention, a software repository is provided for storing said converted UML (Unified Modelling Language) script.

### BRIEF DESCRIPTION OF THE DRAWINGS

Figure 1 shows a conventional software development system;
figure 2 shows a software development system according to an embodiment of the present invention;
figure 3 shows a diagram for illustrating the interaction of components according to one embodiment of the system according to the present invention;
figure 4 shows a diagram for illustrating the implementation of software by using the system according to the present invention;
figure 5 shows a flow chart of an embodiment of the method for testing a process model according to the present invention;
figure 6 shows a diagram for illustrating the operation of web services;
figure 7 shows a diagram showing a layer model for web services;
figure 8 shows a diagram for illustrating the content of a web service as employed by the system according to the present invention.

### DETAILED DESCRIPTION OF THE INVENTION

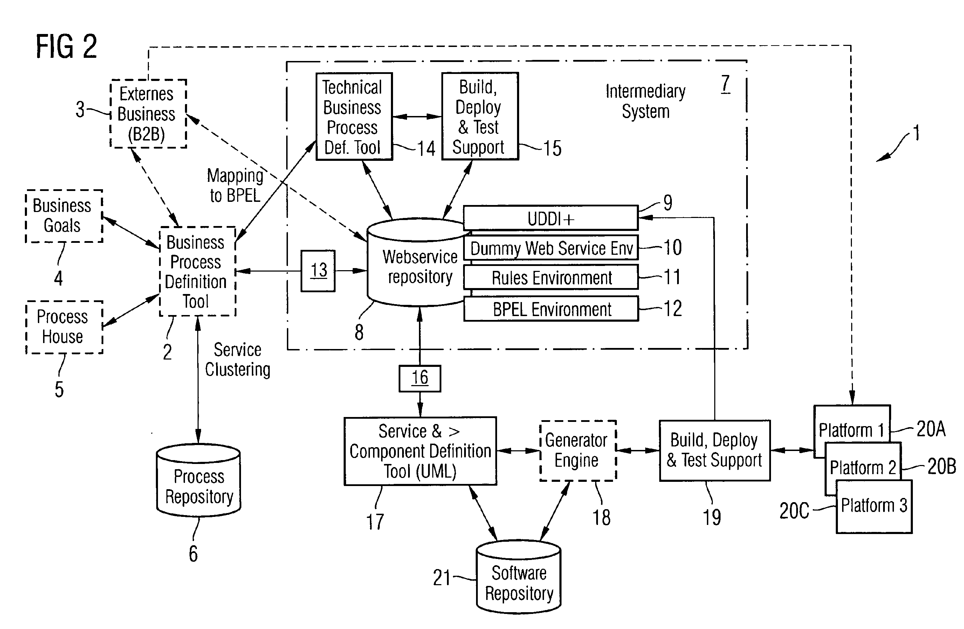

As can be seen from figure 2, which shows a system 1 according to the invention for developing, testing and simulating a software or computer program for a process model. The process model is defined by using a process model definition tool 2, such as "ARIS". The process model can be a technical process, e. g. a manufacturing process comprising several manufacturing subprocesses or manufacturing steps, or a business process, e. g. a business process in the financial sector. The process can be an external business-to-business process 3 as indicated in figure 2. The process model is programmed by a programmer using the process definition tool 2 on the basis of predefined business goals 4 and a process house 5 being a data base of predefined process step elements. The defined process model is stored in a process model repository 6. The defined process model comprises a plurality of inter-linked process steps. For defining a business process model, a business analyst accords to each function events, input variables, output variables, restrictions and requirements, actors, information and eventually applications as well as IT services and software modules. By using a process definition tool, the process model is optimized by the business analyst and an IT solution architect by defining process steps each having at least one corresponding function to which data attributes and function parameters are assigned.

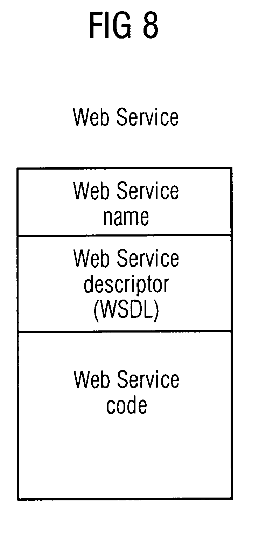

The business process definition tool 2 is connected via an interface to an intermediary system 7 comprising a web service repository 8. The web service 8 is provided for storing executable web services. A web service is designed to support inter-operable machine-to-machine interaction over a network, such as the Internet. The web service has an interface which is described in a machine-processable format, such as WSDL (Web Service Description Language). A web service is illustrated schematically in figure 8. A web service comprises a web service name for identifying the web service, a web service descriptor for describing a function of said web service and, finally, an executable web service program code.

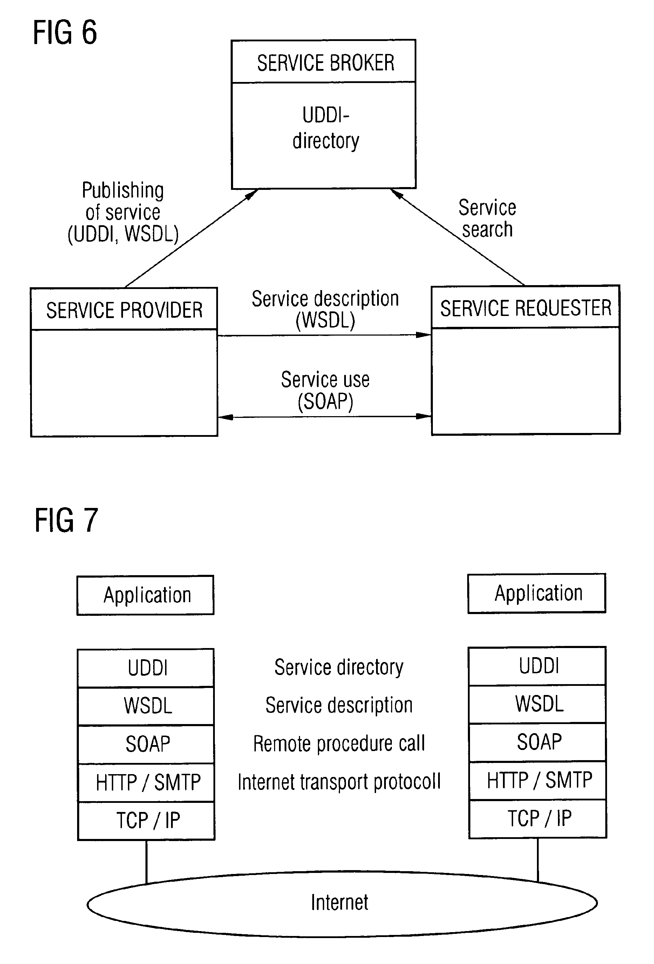

Figure 6 illustrates an interaction of a service provider, a service broker and a service requestor over a network when using web services. A service provider describes his service by means of the web service descriptor using WSDL. This description of his service is published by storing the WDSL web service descriptor in a public UDDI directory (UDDI: Universal Description Discovery and Integration) of a service broker. A service requesting user searches in the UDDI directory of the service broker for services he needs. When the user finds a service which he likes to use, he communicates directly via SOAP (Simple Object Access Protocol) with the service provider. SOAP is a protocol for exchanging XML-based messages over a computer network, such as the Internet. The most common messaging pattern of SOAP is a remote procedure call (RPC) pattern where a first network node, i. e. client, sends a request message to another node, i. e. server. The server immediately sends a response message to the client. UDDI is a platform independent, XML-based registry for service providers to list themselves on the Internet. The UDDI business registration consists of three components, i. e. so-called "White Pages" giving information about the service provider, the so-called "Yellow Pages" listing and describing the provided services and the so-called "Green Pages" giving technical information about services exposed by the service provider. UDDI is designed to be interrogated by SOAP messages and provide access to WSDL documents describing the protocol bindings and message formats required to interact with the web services listed in the UDDI directory. UDDI enables application to look up web service information in order to determine whether to use them. Software application written in various programming languages and running on various platforms can use web services to exchange data over a computer network like the Internet in a manner similar to interprocess communication on a single computer. This inter-operability, for example, between Java and Phyton, or Microsoft Windows and Linux Application, is due to the use of open standards.

Figure 7 shows a layer model of said web services. The basic layer is the TCP/IP layer followed by the Internet transport protocols HTTP/SMTP. Messages which are relevant for the application use the SAOP protocol for remote function calls being encoded in XML. Since any web service can offer different functions, WDSL provides in the next layer a description of the service for application programs. The access to the web services is made possible by use of the UDDI directories which are provided for predetermined services.

As can be seen from figure 2, the web service repository 8 is provided for storing a plurality of executable web services. The intermediary system 7 further comprises an UDDI directory 9, a simulation environment 10 for generating and executing so-called dummy services, a rule engine 11 and an BPEL engine 12 (BPEL: Business Process Execution Language). The UDDI directory 9 lists the web services stored in the web service repository 8 along with additional semantic information, such as pre- and post-conditions. An assignment unit 13 assigns to each process step of the defined process model a corresponding web service stored in the web service repository 8 to generate an executable web service chain in form of the assigned web services. The web service assignment unit 13 performs a mapping of the web services stored in the repository 8 to the process steps of the defined process model. Each web service stored in the web service repository 8 comprises a web service name indicating said web service, a web service descriptor for describing a function of said web service written in WSDL and an executable web service program code as illustrated in figure 8.

When the assignment unit 13 cannot be assigned to a web service stored in the web service repository 8 for the process step since no corresponding web service is stored, a new web service is generated. The assignment unit 13 generates a dummy web service and assigns this dummy web service to a process step when no corresponding web service is stored in the web service repository 8. Each dummy web service comprises a web service name for identifying the web service and for indicating that the web service is a dummy web service. Furthermore, the dummy web service comprises a web service descriptor for describing a function of the generated dummy web service and at least one simulation rule for simulating a function of the dummy web service. The definition of the dummy web service is performed by use of the dummy web service environment 10 as shown in figure 2. The simulation rules are generated by the rule environment 11. The assignment unit 13 assembles an executable web service chain consisting of web services read from the web service repository 8 and of generated dummy web services. On the basis of the web service chain, an executable test process is generated. In a possible embodiment, the generated test process is programmed in a business process execution language BPEL. Accordingly, it is possible to generate an executable test process, for instance, in BPEL before the new functions simulated by the simulation rules of the dummy web services are implemented in real web services. The simulation rules of the dummy web service calculate simulation data for web services assigned to process steps which are linked to said process steps to which the dummy web service has been assigned. The simulation rules of the dummy web service can calculate simulation data in response to input data which is input by a tester. The data input may be input manually or automatically from a testing device. The input data for the simulation rules can also be input from web services assigned to other process steps which are linked to the process step to which the dummy web service has been assigned. The definition of the simulation rules is performed by a rule engine 11 as shown in figure 2. The rule engine 11 consists of an environment for generating and executing the web services. The web services stored in the web service repository 8 may be elementary web services or web services which are assembled from other web services. As can be seen from figure 2, the intermediary system 7 comprises in a possible embodiment an interface for writing external web services from external service providers into the web service repository 8. The executable web service chain consisting of web services read from the web service repository 8 and of defined dummy web services is applied to a technical business process definition tool 14 connected to a test support unit 15. The generated web service chain is executed for test purposes. By testing and simulating the web service chain, a solution architect can improve the process model. After the process model has been optimized, a conversion unit 16 converts the tested process model into a program written in a software modelling language, such as an UML (Unified Modelling Language). The converted UML script is applied to a software definition tool 17 as shown in figure 2. The process model converted into the UML script is run on an engine 18 which is connected to a test support unit 19 which is in turn connected to different software platforms 20A, 20B, 20C. The tested and optimized UML program is stored after a successful test in a software repository 21 as shown in figure 2.

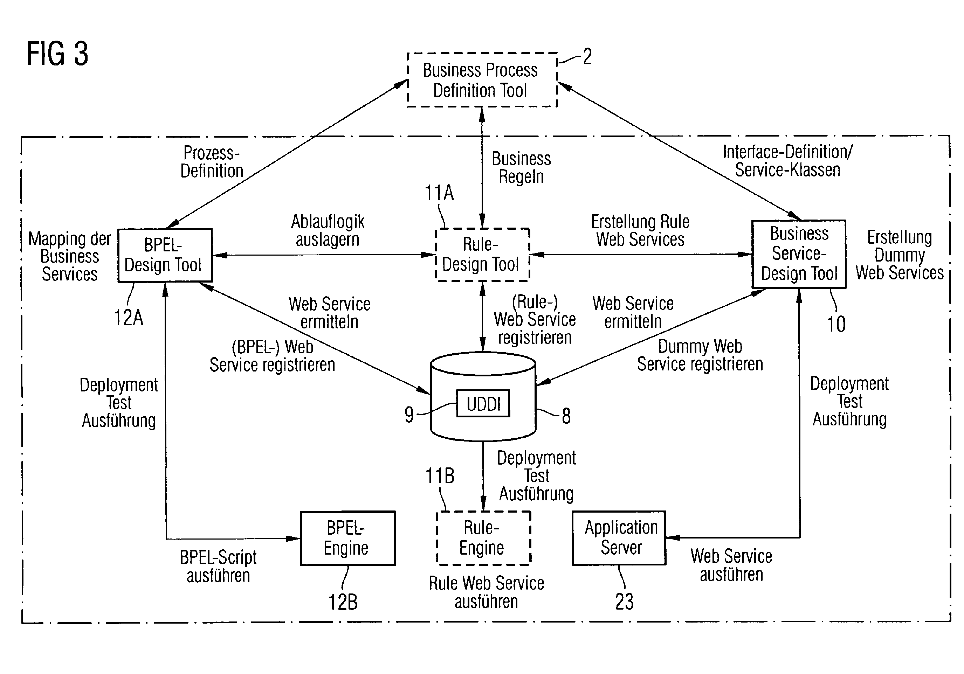

Figure 3 illustrates the development of a software computer program for a process model using the system according to the present invention as shown in figure 2. The BPEL environment 12 consists of a BPEL design tool 12A and a BPEL engine 12B.

The designed BPEL script is executed by the BPEL engine 12B for test purposes. If the BPEL web service has been successfully tested, it is registered in the UDDI directory 9 and can be assigned to a process step of a process model defined by the business process definition tool 2. When there is no web service available in the web service repository 8 for a process step of the defined process model, a new dummy web service is defined by using a dummy web service design tool 10. Each dummy web service comprises at least one simulation rule for simulating a function of said dummy web service wherein the simulation rule is generated by means of a rule design tool 11A and run on a rule engine 11B. When the dummy web service has been created, it can be run on an application server 22 as shown in figure 3.

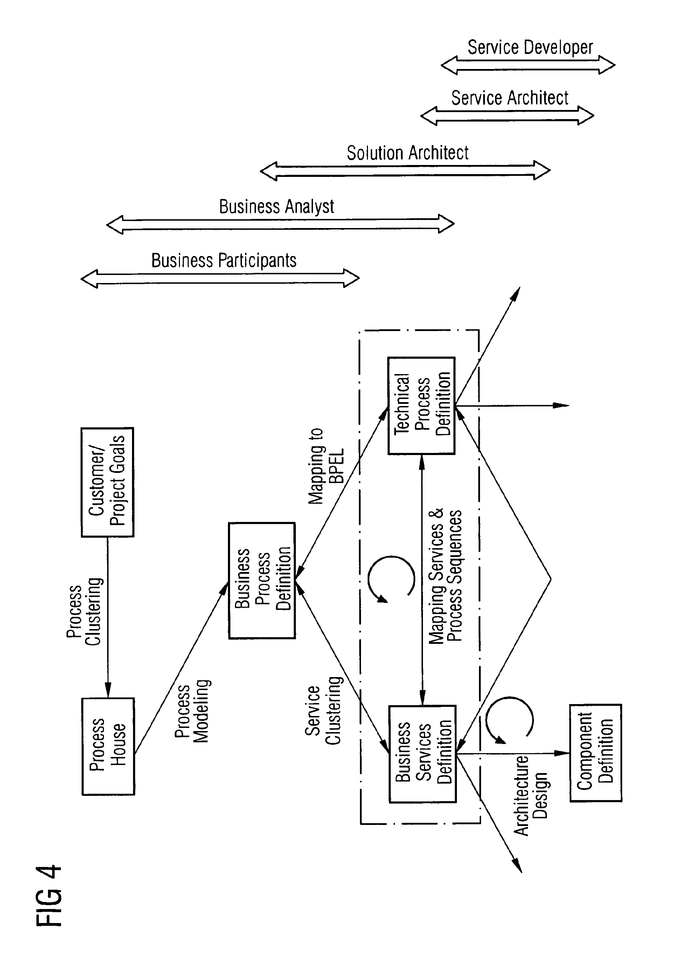

Figure 4 illustrates the development of a software using the software development system 1 according to the present invention as shown in figure 2.

As can be seen from figure 4, the business goals are translated in clustered processes provided to a process house and then modelled by means of the business process definition tool 2. Subsequently, the business service definition and a technical process definition are performed by mapping service and process sequences. Finally, a component definition is done.

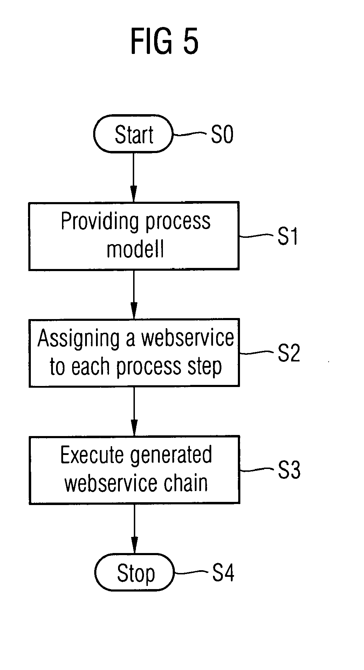

Figure 5 shows a flow chart of a possible embodiment of a method according to the present invention. The method is provided for testing a process model wherein after starting step S0 a process model is provided in a step S1, wherein said process model comprises inter-linked process steps.

To each process step, a corresponding executable web service stored in the web service repository 8 is assigned in step S2 to generate an executable web service chain. The assignment of the web services to the process steps is performed by the assignment unit 13 as shown in figure 2. When no corresponding web service is stored for a process step in the web service repository 8, a dummy web service is generated and assigned to the process step. Each web service stored in the web service repository 8 comprises at least a web service name, a web service descriptor for describing a function of the web service and an executable web service program code. In the same manner, each dummy web service comprises a web service name for identifying the web service and for indicating that the web service is a dummy web service, a web service descriptor for describing a function of said dummy web service, and at least one simulation rule for simulating the function of said dummy web service. The web service descriptors are programmed in a preferred embodiment in WSDL.

In step S3, the generated web service chain consisting of web services read from the web service repository 8 and consisting of dummy web services is executed to test whether the web service chain works to the satisfaction of the tester. The process stops in step S4.

The provision of the intermediary system 7 including a web service repository 8 as shown in figure 2 leads to a significant reduction of the necessary time to develop an operable software program simulating a technical or a business process. The test of said process model of the individual web services can be performed at a much earlier phase of the development. In this manner, it is possible to test technical or business processes by the user without the necessity that each individual web service of the web service chain has already been implemented completely. Furthermore, it is possible to implement user interfaces at an earlier stage, thus reducing the time to market.

The development system as shown in figure 2 further supports outsourcing of implementation of software modules. Accordingly, it is possible to implement different software modules in a parallel manner and to integrate business web services from external suppliers or providers.

The system 1 is based on well-known standards, such as BPEL, UDDI and WSDL facilitating the management of the web service repository 8.

## Claims

1. A method for testing a process model comprising the following steps:
providing the process model having inter-linked process steps;
assigning to each process step a corresponding executable web service stored in a web service repository to generate an executable web service chain;
executing the generated web service chain to test said process model.

2. The method according to claim 1,
wherein each web service comprises:
- a web service name,
- a web service descriptor for describing a function of said web service, and
- an executable web service program code.

3. The method according to claim 1,
wherein when for a process step no corresponding web service is stored in said web service repository, a dummy web service is generated and assigned to the process step.

4. The method according to claim 3,
wherein the dummy web service comprises:
- a web service name for identifying the web service and for indicating that the web service is a dummy web service,
- a web service descriptor for describing a function of said dummy web service, and
- at least one simulation rule for simulating the function of said dummy web service.

5. The method according to claim 4,
wherein the simulation rules of said dummy web service calculate simulation data for web services assigned to process steps which are linked to said process step to which the dummy web service has been assigned.

6. The method according to claim 5,
wherein the simulation rules of said dummy web service calculate simulation data in response to input data.

7. The method according to claim 6,
wherein the input data is input by a tester.

8. The method according to claim 6,
wherein the input data is input from web services assigned to process steps which are linked to said process step to which said dummy service has been assigned.

9. The method according to claim 1,
wherein the provided process model is stored in a process model repository.

10. The method according to claim 1,
wherein the tested process model is converted to an UML (Unified Modelling Language) script which is stored in a software repository.

11. The method according to claim 10,
wherein the converted BPEL script is executed by a BPEL engine.

12. The method according to claim 11,
wherein the BPEL script is modified by means of a BPEL design tool.

13. The method according to claim 2,
wherein the web service descriptor describes a function of said web service in a web service description language (WSDL) .

14. The method according to claim 13,
wherein the web service descriptor is stored in a UDDI (Universal Description Discovery Integration) directory of said web service repository.

15. A system for testing a process model comprising:
a process model repository for storing said process model including inter-linked process steps;
a web service repository for storing executable web services;
an assignment unit for assigning to each process step of said process model under test a corresponding web service stored in said web service repository to generate an executable web service chain; and
an execution unit for executing the generated web service chain to test said process model.

16. The system according to claim 15,
wherein a process definition tool is provided for generating said process model.

17. The system according to claim 15,
wherein the assignment unit assigns a generated dummy web service to a process step when no corresponding web service is stored in said web service repository.

18. The system according to claim 15,
wherein each web service stored in said web service repository comprises:
- a web service name indicating said web service,
- a web service descriptor for describing a function of said web service, and
- an executable web service program code.

19. The system according to claim 17,
wherein a dummy web service assigned by said assignment unit comprises:
- a web service name indicating that the web service is a dummy web service,
- a web service descriptor for describing at least one function of said dummy web service, and
- at least one simulation rule for simulating the functions of said dummy web service.

20. The system according to claim 19,
wherein a rule design tool is provided for generating the simulation rules of said dummy web service.

21. The system according to claim 17,
wherein a generated dummy web service is stored in said web service repository.

22. The system according to claim 15,
wherein a conversion unit is provided for converting the tested process model to an UML (Unified Modelling Language) script.

23. The system according to claim 22,
wherein a software repository is provided for storing said converted UML (Unified Modelling Language) script.
